(19) Europäisches Patentamt / European Patent Office / Office européen des brevets

(11) EP 2 495 978 A1

(12) EUROPÄISCHE PATENTANMELDUNG

(43) Veröffentlichungstag:
   05.09.2012  Patentblatt 2012/36

(51) Int Cl.:
   H04N 13/00 (2006.01)

(21) Anmeldenummer: 11157064.4

(22) Anmeldetag: 04.03.2011

(84) Benannte Vertragsstaaten:
   AL AT BE BG CH CY CZ DE DK EE ES FI FR GB
   GR HR HU IE IS IT LI LT LU LV MC MK MT NL NO
   PL PT RO RS SE SI SK SM TR
   Benannte Erstreckungsstaaten:
   BA ME

(71) Anmelder: 3D Impact Media
   6061 Sarnen (CH)

(72) Erfinder: Fendt, Stefan Manfred
   44575 Castrop-Rauxel (CH)

(74) Vertreter: Patentanwälte
   Westphal, Mussgnug & Partner
   Herzog-Wilhelm-Strasse 26
   80331 München (DE)

(54) **Bildwiedergabeverfahren für ein autostereoskopisches Display**

(57)   Die vorliegende Erfindung betrifft ein Bildwiedergabeverfahren für ein autostereoskopisches Display mit einem Panel und einer vor dem Panel angeordneten haploskopischen Anordnung, das folgende Schritte aufweist: Anzeigen von wenigstens zwei Teilbildfolgen auf dem Panel, wobei jede Teilbildfolge Teilbilder aufweist, die sich parallaktisch unterscheiden, wobei sich zwischen zwei in entlang einer ersten Richtungsachse befindet, und Einfügen von wenigstens einem Zwischenbild in wenigstens eine der Übergangszonen zwischen zwei benachbarten Teilbildfolgen, wobei jede der Teilbildfolgen zumindest ein an eine der Übergangszonen angrenzendes Teilbild aufweist, und wobei das Zwischenbild gegenüber einem der an eine der Übergangszonen angrenzenden Teilbilder einer der Teilbildfolgen invertiert ist.

Fig. 9

EP 2 495 978 A1

## Beschreibung

Die Erfindung betrifft ein Bildwiedergabeverfahren zur räumlichen Darstellung einer Bildfolge für einen oder mehrere Betrachter ohne Hilfsmittel, insbesondere ein Bildwiedergabeverfahren für ein autostereoskopisches Display.

Unter dem Begriff Stereoskopie wird allgemein die Wiedergabe von Bildern verstanden, die einem oder mehreren Betrachtern einen räumlichen Eindruck von Tiefe (Tiefenwahrnehmung), also den Eindruck eines dreidimensionalen Bildes, vermitteln. Stereoskopische Displays erzeugen für das linke und rechte Auge des Betrachters unterschiedliche Bilder, so dass der Betrachter einen dreidimensionalen Seheindruck erhält. Eine Art von stereoskopischen Displays erzeugt die verschiedenen Bilder zeitlich aufeinanderfolgend und erfordern daher Hilfsmittel, wie Shutterbrillen (auch 3D-Brillen oder Blendenbrillen), um einen echte Tiefenwahrnehmung beim Betrachter hervorrufen können. Eine andere Art von stereoskopischen Displays sind autostereoskopische Displays, bei denen die verschiedenen Bilder gleichzeitig auf einem Display dargestellt werden, wobei eine "Kanaltrennung", d.h. eine optische Trennung der Bilder für das linke und rechte Auge, durch ein spezielles dem Display vorgeschalteten Filter erfolgt. Hierdurch kann bei einem oder mehreren Betrachtern eine Tiefenwahrnehmung hervorgerufen werden, ohne das zusätzliche Hilfsmittel erforderlich wären.

Indem bei autostereoskopischen Displays den Augen eines Betrachters unterschiedliche Bilder angeboten werden, wird ein natürliches und räumlich-kontinuierliches Lichtfeld angenähert und damit eine Tiefenwahrnehmung bewirkt. Die Annäherung eines natürlichen und räumlich-kontinuierlichen Lichtfeldes erfolgt bei einem derartigen Display diskret. Mit der dadurch erzielten Diskretisierung eines räumlich-kontinuierlichen Lichtfeldes kann eine Unterabtastung einhergehen, die zu optischen Störungen führen kann, welche durch Aliasing, Quantisierungsfehler, einem invertierten Stereoeindruck sowie Doppelkonturen hervorgerufen werden können, die insbesondere dann auftreten können, wenn der Betrachter seine Position relativ zu dem Display ändert. Derartige optische Störungen können beispielsweise auch Moiré-Effekte sein, die sich durch grobe Raster auf dem Display äußern und die vom Betrachter in der Regel als sehr störend empfunden werden.

Daher ist es Aufgabe der vorliegenden Erfindung, ein Verfahren bereitzustellen, das optisch sichtbare Störungen bei einem autostereoskopischen Display reduziert.

Diese Aufgabe wird durch ein Verfahren gemäß der Merkmale des Patentanspruchs 1 gelöst. Ausgestaltungen und Weiterbildungen des Erfindungsgedankens sind Gegenstand von Unteransprüchen.

Die erfindungsgemäße Aufgabe wird insbesondere gelöst durch ein Bildwiedergabeverfahren für ein autostereoskopisches Display, das ein Panel und eine vor oder hinter dem Panel angeordneten haploskopische Anordnung aufweist, wobei das Verfahren folgende Schritte aufweist: Anzeigen von wenigstens zwei Teilbildfolgen auf dem Panel, wobei jede Teilbildfolge Teilbilder aufweist, die sich parallaktisch unterscheiden, wobei sich zwischen zwei entlang einer ersten Richtungsachse benachbart dargestellten Teilbildfolgen jeweils eine Übergangszone befindet; Einfügen von wenigstens einem Zwischenbild in wenigstens eine der Übergangszonen zwischen zwei benachbarten dargestellten Teilbildfolgen, wobei jede der Teilbildfolgen zumindest ein an eine der Übergangszonen angrenzendes Teilbild aufweist, und wobei das Zwischenbild gegenüber einem der an eine der Übergangszonen angrenzenden Teilbilder einer der Teilbildfolgen invertiert ist.

Die Erfindung wird nachfolgend anhand von in den Figuren dargestellten Ausführungsbeispielen näher erläutert. In den Figuren bezeichnen gleiche Bezugszeichen gleiche oder ähnliche Komponenten. Die in den Figuren abgebildeten Komponenten sind zueinander nicht notwendigerweise maßstabsgetreu.

Figur 1     zeigt in einer Draufsicht schematisch ein autostereoskopisches Display.

Figur 2     zeigt in einer Vorderansicht eine als optisches Barrierefilter ausgeführte haploskopische Anordnung.

Figur 3     zeigt in einer Draufsicht schematisch ein autostereoskopisches Display mit einer haploskopischen Anordnung und die Position eines möglichen Betrachters.

Figur 4     zeigt in einer Draufsicht schematisch ein autostereoskopisches Display mit einer haploskopischen Anordnung und die Position eines Betrachters, der

Figur 5     sich in einer ersten Position relativ zu dem Display befindet. zeigt in einer Draufsicht schematisch ein autostereoskopisches Display mit einer haploskopischen Anordnung und die Position eines Betrachters, der sich in einer ersten Position relativ zu dem Display befindet.

Figur 6     veranschaulicht anhand eines Diagramms Teilbilder von Teilbildfolgen abhängig von der Relativposition eines Betrachters zu einem Display, das Übergangszonen zwischen benachbarten Teilbildfolgen aufweist.

Figur 7     veranschaulicht anhand eines Diagramms Teilbilder von Teilbildfolgen abhängig von der Relativposition eines Betrachters zu einem Display, das breite Übergangszonen zwischen benachbarten Teilbildfolgen und in die Übergangszonen eingefügte invertierte Zwischenbilder aufweist.

Figur 8      veranschaulicht anhand eines Diagramms Teilbilder von Teilbildfolgen abhängig von der Relativposition eines Betrachters zu einem Display, das breite Übergangszonen zwischen benachbarten Teilbildfolgen und in die Übergangszonen eingefügte invertierte Zwischenbilder aufweist.

Figur 9      veranschaulicht anhand eines Diagramms Teilbilder von Teilbildfolgen abhängig von der Relativposition eines Betrachters zu einem Display, das breite Übergangszonen zwischen benachbarten Teilbildfolgen und jeweils drei in die Übergangszonen eingefügte invertierte Zwischenbilder aufweist.

Figur 10     veranschaulicht anhand eines Blockschaltbilds ein erstes Ausführungsbeispiel einer Display-Ansteuervorrichtung.

Figur 11     veranschaulicht eine Abwandlung der Display-Ansteuervorrichtung gemäß Figur 10.

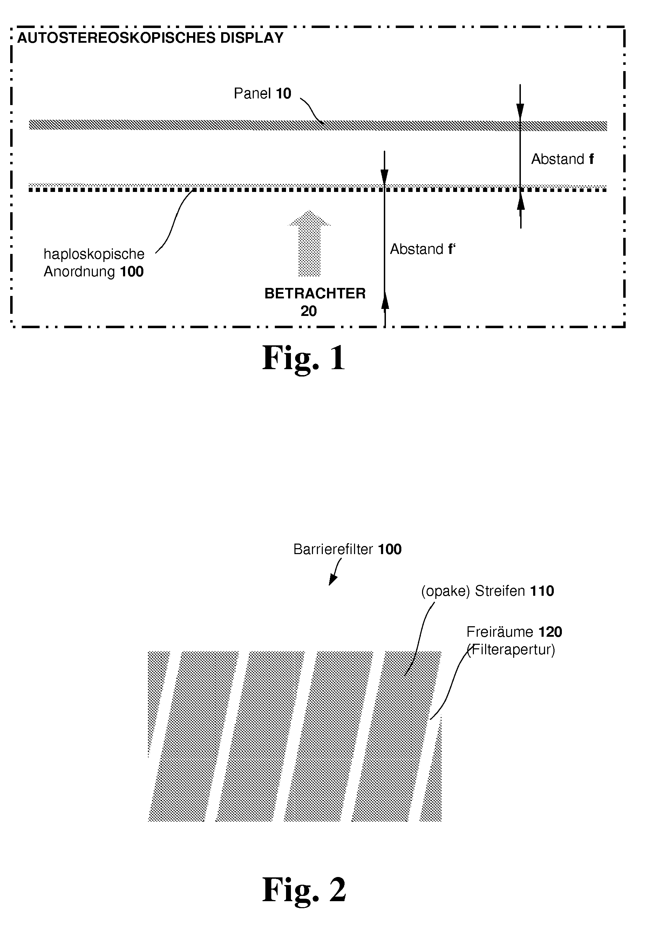

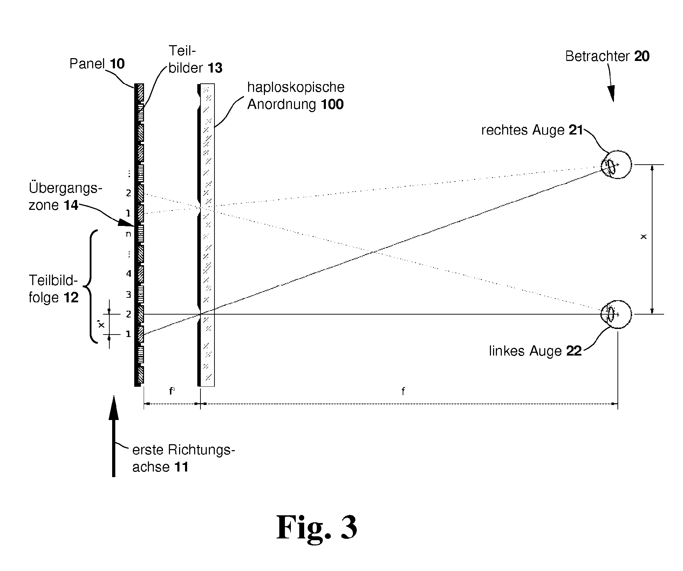

Figur 1 zeigt schematisch eine Draufsicht auf ein autostereoskopisches Display mit einem Panel 10 und einer haploskopischen Anordnung 100. Die haploskopische Anordnung 100 ist im Abstand f parallel zu dem Panel 10 angeordnet. Der Abstand eines Betrachters 20 zu der haploskopischen Anordnung 100 ist mit f' bezeichnet. Das Panel 10 kann beispielsweise als TFT-, LCD- oder Plasmapanel ausgeführt sein und ist für eine Bildwiedergabe vorgesehen. Es kann jedoch auch eine andere geeignete Panel-Technologie verwendet werden. Die haploskopische Anordnung 100 kann beispielsweise als optisches Barrierefilter oder als Lentikularanordnung, insbesondere als Lentikularfolie, ausgeführt sein und dient dazu, bei einem oder mehreren Betrachtern 20 eine Tiefenwahrnehmung hervorzurufen. Als Lentikularfolien (auch Linsenraster- oder Prismenrasterbild) werden solche Folien bezeichnet, die eine Vielzahl von kleinen Linsen oder Prismen aufweisen. Die Lentikularfolie kann auf dem Panel 10 angebracht werden. Anstatt einer Lentikularfolie kann das Panel auch mit einer Lentikularbeschichtung versehen werden.
Gemäß einem anderen Ausführungsbeispiel kann die haploskopische Anordnung 100 aus Sicht des Betrachters 20 auch hinter dem Panel 10 angeordnet sein. Die haploskopische Anordnung 100 kann in diesem Fall als gerichtete Beleuchtung ausgeführt sein. Für das erfindungsgemäße Verfahren ist es irrelevant, ob die haploskopische Anordnung 100 hinter dem Panel (nicht gezeigt) oder vor dem Panel (Figur 1) angeordnet ist.
Figur 2 zeigt in einer Vorderansicht (aus Sicht des Betrachters 20) eine als optisches Barrierefilter ausgeführte haploskopische Anordnung 100. Das Barrierefilter weist ein periodisches Streifenmuster mit mehreren parallel zueinander verlaufenden optisch durchlässigen (opaken) Streifen 110 auf. Die opaken Streifen 110 sind durch Freiräume 120 (Filterapertur) voneinander getrennt.
Anhand von Figur 3 wird nachfolgend das grundlegende Prinzip der Stereoskopie bzw. der Autostereoskopie kurz erläutert. Figur 3 veranschaulicht in einer Draufsicht schematisch ein autostereoskopisches Display mit einer haploskopischen Anordnung und die Position eines Betrachters, wobei in Figur 3 schematisch das rechte und das linke Auge 21, 22 des Betrachters 20 dargestellt ist. Wie bereits erwähnt, approximieren autostereoskopische Displays natürliche räumlich-kontinuierliche Lichtfelder, so dass bei einem Betrachter 20 eine Tiefenwahrnehmung hervorgerufen wird und ein dreidimensionaler Eindruck entsteht. Diese räumliche oder dreidimensionale Wahrnehmung des Menschen wird im Wesentlichen dadurch bewirkt, dass jedes Auge 21, 22 ein unterschiedliches Bild wahrnimmt. Hierauf basiert die Stereoskopie bzw. die Autostereoskopie im Wesentlichen.
In Figur 3 sind auf dem Panel 10 Teilbilder 13 dargestellt, die entlang einer (ersten) Richtungsachse 11 im Abstand x' zueinander angezeigt bzw. dargestellt werden. Die einzelnen Teilbilder 13 können jeweils mehrere Bildpunkts (Pixel) aufweisen. Eines oder mehrere der in der ersten Richtungsachse nebeneinander angeordneten Teilbilder 13 bilden eine Teilbildfolge 12. Jedem der Teilbilder 13 einer Teilbildfolge ist ein Index i (Teilbildindex) zugeordnet. Dieser Teilbildindex i umfasst beispielsweise die ganzzahligen Werte i = (1, 2, 3, ..., n), wobei n die Anzahl der Teilbilder 13 pro Teilbildfolge 12 ist. Bei autostereoskopischen Displays gilt $n \geq 2$. Die Teilbilder der einzelnen Teilbildfolgen sind entlang der ersten Richtungsachse benachbart zueinander angeordnet bzw. werden in entlang der ersten Richtungsachse benachbart zueinander dargestellt. Darüber hinaus sind mehrere Teilbildfolgen entlang der ersten Richtungsachse benachbart zueinander angeordnet bzw. werden entlang der ersten Richtungsachse benachbart zueinander dargestellt. Zwischen zwei entlang der ersten Richtungsachse 11 benachbarten Teilbildfolgen, also zwischen dem Teilbild n einer Teilbildfolge und dem Teilbild 1 der benachbarten Teilbildfolge befindet sich jeweils eine Übergangszone 14, die auch als Sprungzone oder Sprungpunkt bezeichnet wird. Jede von zwei benachbarten Teilbildfolgen weist ein an die Übergangszone 14 angrenzendes Teilbild 13 auf. Dies sind die zuvor genannten Teilbilder mit dem Teilbildindex i=n für eine Teilbildfolge und dem Teilbildindex i=1 für die benachbarte Teilbildfolge. Auf dem Panel 10 werden wenigstens zwei Teilbildfolgen 12 angezeigt, zwischen denen eine Übergangszone 14 liegt. Der Augenabstand des Betrachters ist in Figur 3 mit x bezeichnet.

Die einzelnen Teilbilder 13 einer Teilbildfolge 12 zeigen das gleiche Motiv. Sie unterscheiden sich allerdings parallaktisch. Die Teilbilder 13 einer Teilbildfolge 12 zeigen also jeweils das gleiche Objekt aus unterschiedlichen Perspektiven, wodurch eine Parallaxe hervorgerufen wird. Um eine Tiefenwahrnehmung zu bewirken, sollte vermieden werden, dass der Betrachter 20 alle Teilbilder 13 einer Teilbildfolge 12 gleichzeitig sieht. Dies wird auch als haploskopische Trennung bezeichnet, die mit der haploskopischen Anordnung 100, wie beispielsweise einem Barrierefilter oder einer Lentikularfolie, erreicht werden kann. Durch die haploskopische Trennung nimmt das rechte Auge 21 des Betrachters ein anderes Teilbild einer Teilbildfolge 12 als das linke Auge 22 wahr. In Figur 3 sind ausgehend von den Augen 21, 22 des Betrachters 20 vier Geraden dargestellt, die von Teilbildern ausgehende Lichtstrahlen repräsentieren und die damit eine momentane Wahrnehmung des Betrachters schematisch repräsentieren. In der beispielhaft dargestellten Position des Betrachters 20 relativ zu dem Panel 10 nimmt das linke Auge 22 das Teilbild 2 und das rechte Auge 21 das Teilbild 1 der Teilbildfolge 12 wahr. Das Teilbild 1 unterscheidet sich parallaktisch von dem Teilbild 2. Diese beiden Teilbilder 1, 2 werden durch das visuelle System des Beobachters 20 zu einem scheinbar dreidimensionalen Bild verarbeitet, wodurch letztlich eine Tiefenwahrnehmung beim Betrachter 20 bewirkt wird.

Die einzelnen Teilbilder einer Teilbildfolge können statische, d.h. zeitlich unveränderliche Bilder sein. In diesem Fall bietet sich dem Betrachter ein statisches dreidimensionales Bild. Die einzelnen Teilbilder können selbstverständlich jedoch auch zeitlich veränderlich sein, d.h. jedes Teilbild kann eine zeitliche Abfolge von Teilbildern aufweisen, die nachfolgend als Sub-Teilbilder bezeichnet werden.

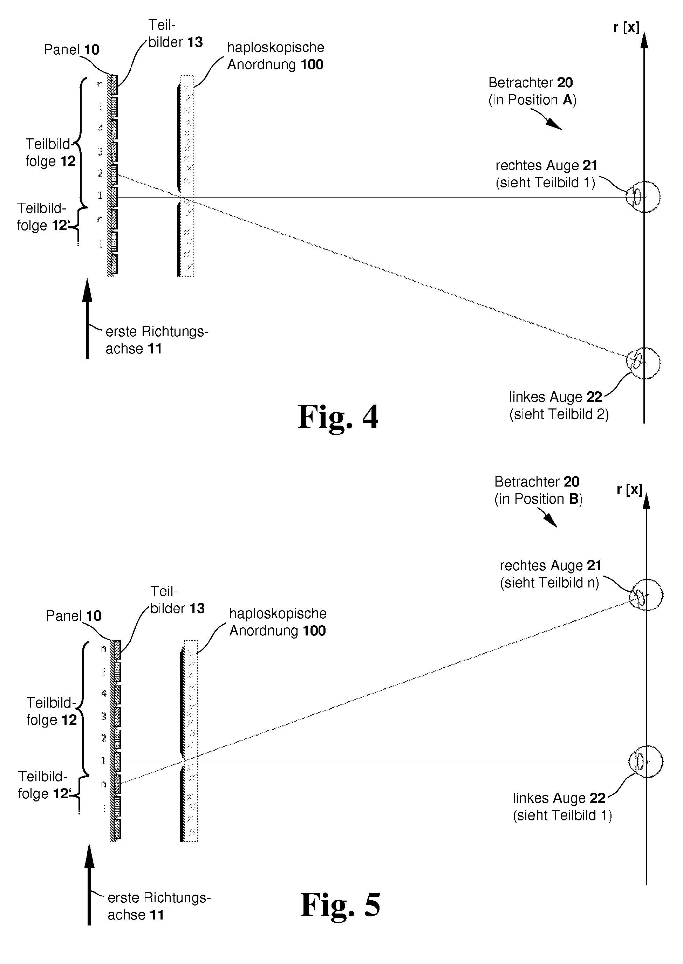

In Figur 4 ist in einer Draufsicht schematisch ein autostereoskopisches Display mit einer haploskopischen Anordnung 100 und ein Betrachter 20, der sich in einer ersten Relativposition A relativ zu dem Display befindet, dargestellt. Diese erste Relativposition A entspricht der Relativposition gemäß Figur 3 in der das rechte Auge 21 das Teilbild 1 und das linke Auge 22 das Teilbild 2 der selben Teilbildfolge 12 wahrnimmt. Dadurch wird beim Betrachter, wie anhand von Figur 3 erläutert wurde, eine Tiefenwahrnehmung hervorgerufen. Der Betrachter 20 kann jedoch seine Relativposition entlang einer Achse r (Betrachterraum) ändern. Zu Zwecken der Erläuterung sei angenommen, dass das Maß für die Einheit dieser Achse r der Augenabstand x ist. Bei dem in Figur 4 dargestellten Beispiel verläuft die Achse r parallel zu dem Panel 10. In der Praxis ändern Betrachter 20 häufig lediglich ihre horizontale Position relativ zu dem Panel, d.h. ihre Position entlang der Achse r. Dies ist beispielsweise der Fall, wenn das autostereoskopische Display in stark frequentierten öffentlichen Bereichen, wie z.B. Bahnhöfen, Flughäfen, Einkaufscentern, etc. angebracht ist.

Figur 5 veranschaulicht eine Situation, bei der der Betrachter 20 eine gegenüber der Relativposition A gemäß Figur 4 geänderte zweite Relativposition B einnimmt, die gegenüber der Relativposition A entlang der Achse r verschoben ist. Bei dem in Figur 5 gezeigten Beispiel nimmt das linke Auge 22 das Teilbild 1 einer ersten Teilbildfolge 12 wahr, während das rechte Auge 21 das Teilbild n einer zweiten Teilbildfolge 12' wahrnimmt. Die zweite Teilbildfolge 12' wird benachbart zu der ersten Teilbildfolge 12 auf dem Panel angezeigt, wobei die beiden Teilbildfolgen bzw. deren Darstellungspositionen durch eine Übergangszone voneinander getrennt sind. In dem Beispiel gemäß Figur 5 nimmt der Betrachter 20 also gleichzeitig Teilbilder von zwei unterschiedlichen Teilbildfolgen 12, 12' wahr, nämlich das Teilbild n der zweiten Teilbildfolgen 12' und das Teilbild 1 der ersten Teilbildfolge 12. Dadurch entstehen störende Doppelkonturen, da die Disparitäten zwischen den Teilbildern n bzw. 1 der beiden Teilbildfolgen 12' bzw. 12 zu groß und invertiert sind. Mit anderen Worten an Teilbild so aufgefasst werden, als würde eine Kamera eine Aufnahme einer Szene (bzw. Objekt, Motiv) erstellen. Die weiteren Teilbilder einer Teilbildfolge stellen die selbe Szene dar, allerdings für eine jeweils andere Kameraposition (Perspektive). Für eine Teilbildfolge aus n Teilbildern existieren n Perspektiven. Ein Teilbild hat ein linkes und rechtes benachbartes Teilbild, mit Ausnahme jener Teilbilder, die sich an den Rändern der Teilbildfolgen (Indizes i=1,n) befinden. Benachbarte Teilbildfolgen 12, 12' unterscheiden sich nicht lediglich durch unterschiedliche Perspektiven ihrer Teilbilder, sondern die Teilbilder der einzelnen Teilbildfolgen 12, 12' zeigen auch unterschiedliche Motive bzw. Objekte, was als Disparität bezeichnet wird. Ein weiterer Effekt, der auftreten kann, wenn sich der Betrachter an der Relativposition B (Sprungpunkt) befindet, ist eine (fälschliche) Invertierung der Tiefenwahrnehmung. Wenn der Betrachter allerdings zwei vom Rand der Teilbildfolge(n) entfernte Bilder wahrnimmt (z.B. Relativposition A), so entsteht eine korrekte Stereoansicht. Außerdem können bei Änderung der Relativposition des Betrachters 20 zusätzlich weitere optische Störungen, wie beispielsweise Moiré-Effekte auftreten.

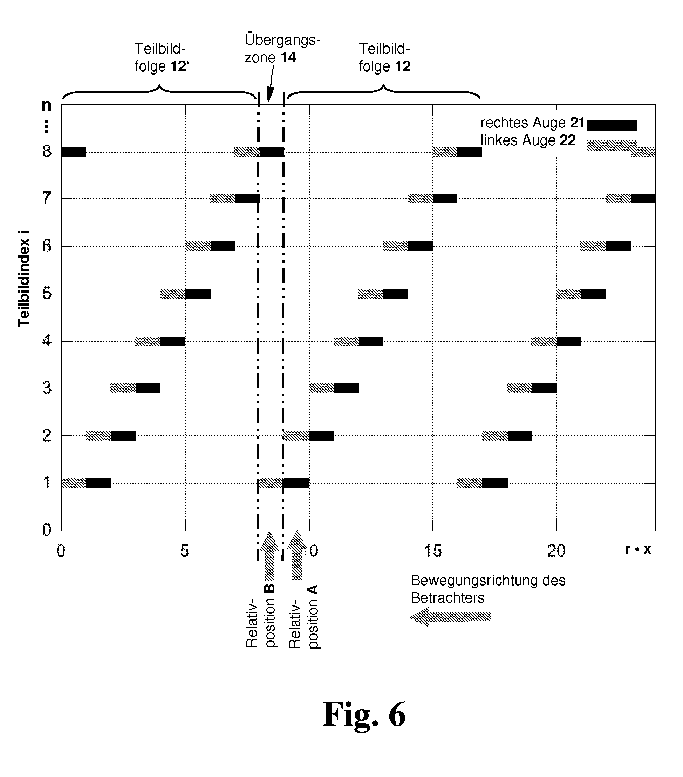

In Figur 6 sind in einem Diagramm Teilbilder i=(1, ..., n), mit beispielsweise n = 8, von Teilbildfolgen 12, 12' abhängig von der Position eines Betrachters 20 relativ zu einem Display dargestellt, wobei das Display Übergangszonen 14 zwischen benachbarten Teilbildfolgen 12, 12' aufweist. Das Display kann auf übliche Weise angesteuert werden. Die Relativposition des Betrachters 20 ist in Figur 6 normiert auf den Augenabstand x des Betrachters dargestellt. So beträgt beispielsweise der Abstand zwischen einer mit "5" bezeichneten Position und einer mit "10" bezeichneten Position das 5-fache des Augenabstands x. Das Diagramm veranschaulicht abhängig von der Betrachterposition, welche Teilbilder die Augen 21, 22 jeweils wahrnehmen. Befindet sich der Betrachter beispielsweise im Bereich einer Übergangszone 14 an einer in Figur 5 dargestellten Relativposition B, so nimmt das linke Auge 22 das Teilbild 1 der Teilbildfolge 12 und das rechte Auge 21 das Teilbild n = 8 der benachbarten Teilbildfolge 12' wahr. Verglichen mit einer Relativposition A, die in Figur 5 ebenfalls dargestellt ist und bei der das rechte Auge 22 das erste Teilbild 1 der Teilbildfolge 12 und das linke Auge das Teilbild 2 derselben Teilbildfolge wahrnimmt, ist die Wahrnehmung an der Relativposition B invertiert, was auch als invertierten Stereoansicht bezeichnet wird. Diese invertierte Stereoansicht tritt abrupt auf, wenn sich der Betrachter entlang der Achse r bewegt in eine Übergangszone 14 bewegt. Darüber hinauskönnen optische Störungen, wie beispielsweise Doppelkonturen, auftreten, insbesondere durch Inversion der Ansichten auftreten.

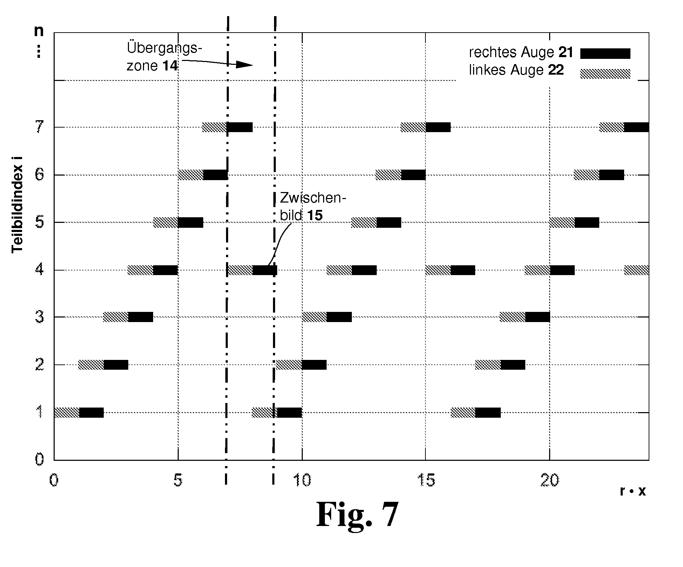

Um solche optischen Störungen, insbesondere die Doppelkonturen, zu vermeiden, können im Vergleich zu herkömmlichen Displays breitere Übergangszonen vorgesehen werden. Solche breiteren Übergangszonen 14 haben zur Folge, dass optische Störungen, wie sichtbare Doppelkonturen, verglichen mit schmalen Übergangszonen 14 (vgl. Figur 6) vom Betrachter kaum wahrgenommen werden. Bezugnehmend auf Figur 7, in der ein dem Diagramm gemäß Figur 6 entsprechendes Diagramm dargestellt ist, wird in der Übergangszone 14 zwischen zwei benachbarten Teilbildfolgen 12, 12' wenigstens ein Zwischenbild 15 eingefügt bzw. dargestellt. Dieses Zwischenbild ist gegenüber einem der Teilbilder, die an die Übergangszone angrenzen, invertiert. Teilbilder, die an die Übergangszone 14 angrenzen sind in dem Beispiel gemäß Figur 7 das Teilbild 7 einer ersten Teilbildfolge und das Teilbild 1 einer benachbarten zweiten Teilbildfolge 12. Das Zwischenbild 15 entstammt üblicherweise der Mitte (Bildfolgemitte)einer der Teilbildfolgen. "Invertiert" bedeutet in diesem Zusammenhang, dass das Zwischenbild, wenn es der ersten Teilbildfolge entstammt, einen niedrigeren Teilbildindex aufweist als das an die Übergangszone 14 angrenzende Teilbild 7 der ersten Teilbildfolge, oder dass das Zwischenbild, wenn es der zweiten Teilbildfolge entstammt, einen höheren Teilbildindex aufweist als das an die Übergangszone 14 angrenzende Teilbild 1 der zweiten Teilbildfolge.

Invertierte Zwischenbilder, wie das Zwischenbild 15 gemäß Figur 7, verursachen beim Betrachter 20 inverse querdisparate Stereoreize, die jedoch für dessen visuelles System kaum störend wirken, da das visuelle System in den Übergangszonen 14 auf andere Möglichkeiten der Tiefenwahrnehmung, beispielsweise aufgrund von Objektbewegung oder der momentanen Perspektive, zurückgreifen kann. Die Doppelkonturen wirken jedoch stets stark störend und können durch breitere Übergangszonen 14 wirksam reduziert werden.

In Figur 7 sind Teilbilder $i = (1, ..., n)$, wobei beispielhaft $n = 7$, von benachbarten Teilbildfolgen 12, 12' über der Relativposition eines Betrachters 20 zu einem Display dargestellt. Gegenüber dem Beispiel gemäß Figur 6 ist hier jeweils ein invertiertes Zwischenbild 15 an jeder der Übergangszonen 14 dargestellt. Anhand eines Vergleichs der Figuren 6 und 7 erkennt man, dass die Übergangszonen 14 bei dem Beispiel gemäß Figur 7 verbreitert sind. In dem dargestellten Beispiel ist die Tiefenwahrnehmung für einen Betrachter 20 an den Relativpositionen $r = (0, 1, 8, 15, 16, ...) \cdot x$ invertiert. Der Bereich, in dem beim Betrachter eine inverse Stereowahrnehmung hervorgerufen wird, ist verglichen mit Figur 6 (ohne Zwischenbild, herkömmliche Displayansteuerung) doppelt so groß, wodurch die sich jedoch die Größe der sichtbaren Doppelkonturen halbiert. Die in die Übergangszonen 14 eingefügten Zwischenbilder 15 können Teilbildern entsprechen, die nicht an die Übergangszone angrenzen. In dem dargestellten Beispiel kommen, außer dem dargestellten Teilbild 4 grundsätzlich alle Teilbilder $i = (2, ..., n-1)$, wobei $n = 6$, in Frage.

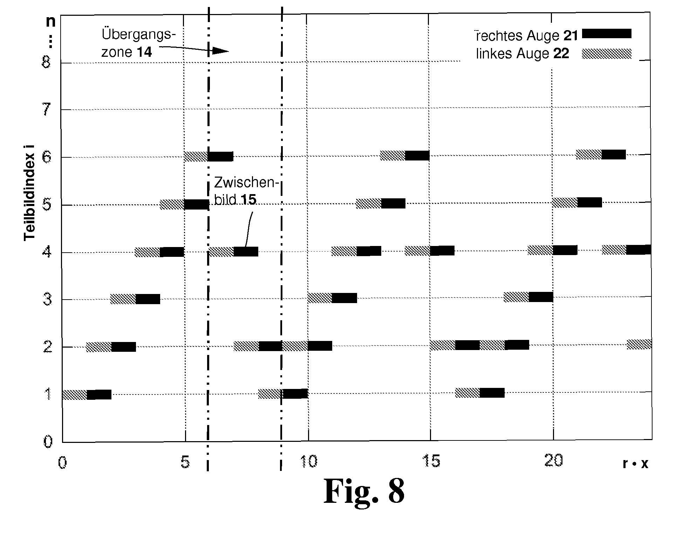

Figur 8 veranschaulicht anhand eines dem Diagramm gemäß Figur 7 entsprechenden Diagramm ein Beispiel, bei dem jeweils zwei invertierte Zwischenbilder 15 in die Übergangszonen 14 eingefügt bzw. dort dargestellt sind. Der Bereich, in dem beim Betrachter eine inverse Stereowahrnehmung hervorgerufen wird, ist verglichen mit einer herkömmlichen Displayansteuerung (Figur 6) dreimal so groß. Doppelkonturen werden nahezu vollständig unterdrückt. Für ein Display mit acht Ansichten ($n = 8$) erweist sich eine Ansteuerung wie in Figur 8 gezeigt als besonders vorteilhaft.

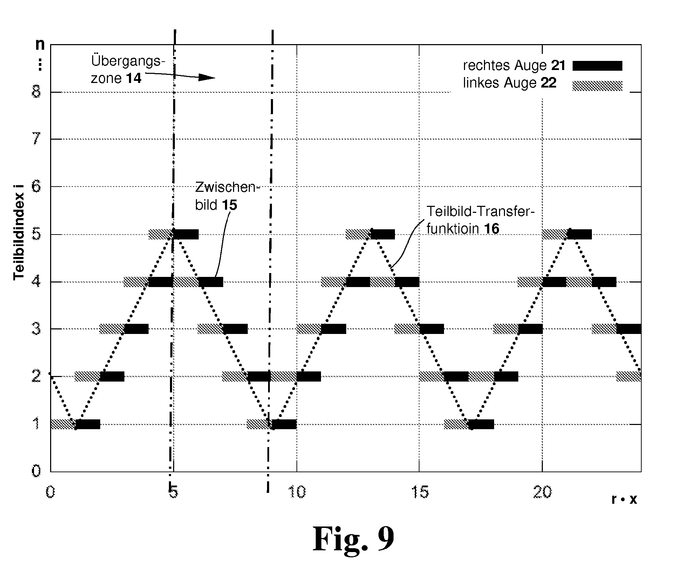

Figur 9 veranschaulicht ein weiteres Beispiel, bei dem jeweils drei invertierte Zwischenbilder 15 in die Übergangszonen eingefügt bzw. dort dargestellt werden. Doppelkonturen werden hierdurch praktisch unsichtbar. Der Bereich, in dem beim Betrachter eine inverse Stereowahrnehmung hervorgerufen wird ist, verglichen mit einer herkömmlichen Darstellung bzw. Displayansteuerung, wie sie in Figur 6 dargestellt ist, genau so groß, wie der Bereich der nicht-invertierten (normalen) Stereowahrnehmung.

Figur 9 veranschaulicht außerdem eine Teilbild-Transferfunktion 16. Es sei an dieser Stelle angemerkt, dass die Teilbild-Transferfunktion in r-Koordinaten, also im Betrachterraum, dargestellt ist. Die Generierung der Teilbild-Transferfunktion erfolgt jedoch panelseitig (in geeigneten Panelkoordinaten) und unabhängig vom Betrachter und dessen Relativposition mittels einer geeigneten Display-Ansteuerungsvorrichtung. Bei dem in Figur 9 dargestellten Beispiel wurde die Teilbild-Transferfunktion aus den Panelkoordinaten in den Betrachterraum (r-Koordinaten) überführt. Über die Teilbild-Transferfunktion 16 können insbesondere die Anzahl n der Teilbilder 13 pro Teilbildfolge 12 und die Anzahl der Zwischenbilder 15 pro Übergangszone 14 festgelegt werden. Darüber hinaus kann über die Steigung der Teilbild-Transferfunktion 16 der Abstand x' der Teil- und Zwischenbilder 14, 15 auf dem Panel 10 vorgegeben werden. Insofern erfolgt über die Vorgabe der Anzahl der Teil- und Zwischenbilder die erfindungsgemäße Einstellung der Breite der Übergangszonen 14. Die Transferfunktion 16 kann gemäß einer Ausführungsform eine Drecks- oder Sägezahnfunktion, wie in Figur 9 dargestellt, sein. Die Steigung (Slope) einer solchen Transferfunktion kann beispielsweise stufenlos variiert werden.

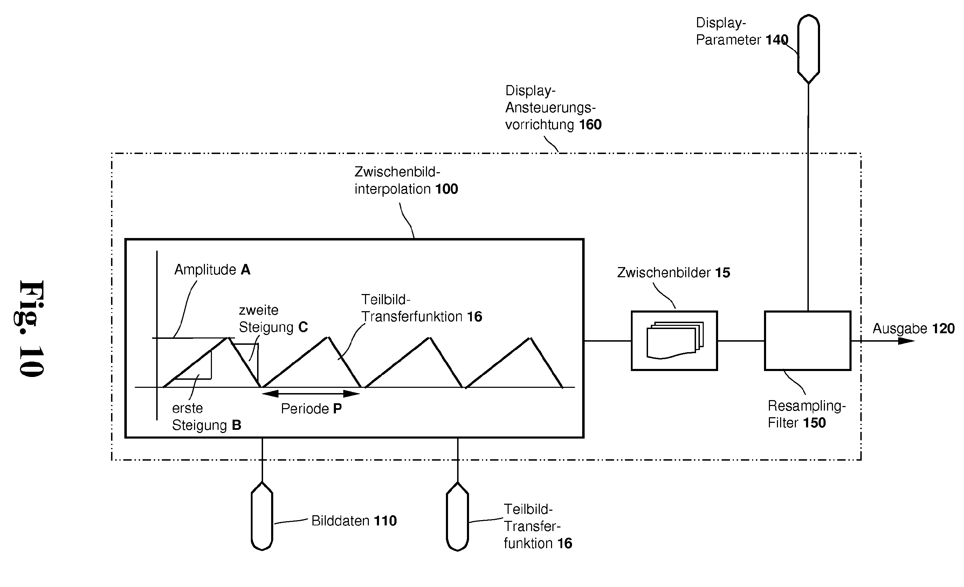

In Figur 10 ist anhand eines Blockschaltbilds dargestellt, wie das erfindungsgemäße Verfahren prinzipiell in einer Display-Ansteuerungsvorrichtung 160 implementiert werden kann. Der Display-Ansteuerungsvorrichtung 160 wird eine Teilbild-Transferfunktion 16 zugeführt, die - wie dargestellt ist - beispielsweise eine Sägezahnfunktion ist. Die Display-Ansteuerungsvorrichtung 160 weist einen Zwischenbildinterpolationsblock 100 auf. In diesem Block werden Zwischenbilder 15 anhand der Teilbild-Transferfunktion 160 und anhand von darzustellenden Bilddaten 110 interpoliert.

Dort wird die Teilbild-Transferfunktion 160 je nach Bedarf in Panelkoordinaten stufenlos variiert. Insbesondere können stufenlos eine Amplitude A, eine erste und eine zweite Steigung B, C und eine Periode P der Teilbild-Transferfunktion variiert werden. Die Steigung C wird beispielsweise unendlich groß, wenn keine Zwischenbilder 15 in die Übergangszonen 14 eingefügt werden (herkömmliche Display-Ansteuerung). Die Zwischenbildinterpolation 10 gibt die entsprechende Anzahl Zwischenbilder 15 aus. Die Zwischenbilder 15 können mittels eines Resampling-Filters 150 einem Resampling unterzogen werden. Als Resampling-Filter 150 können bekannte Box-Filter, FIR-Tiefpassfilter (FIR: Finite Impulse Response, auch Transversalfilter) oder andere geeignete Filter verwendet werden. Das Resampling kann basierend auf DisplayParametern 140 durchgeführt werden und kann daher im Wesentlichen davon abhängig gemacht werden, wie viele Ansichten für ein gegebenes Pixel oder Teilbild des Displays benötigt werden, um die aus der Unterabtastung resultierenden Doppelkonturen so zu filtern, dass sie ein bestimmtes SNR (Signal-To-Noise-Ratio) erreichen. Bei 8-Bit-Bilddaten 110 ist ein SNR = 48 dB, eine höchstens 256-fache Überabtastung (Oversampling), vorteilhaft. Die Überabtastung kann, beispielsweise abhängig vom lokalen Kontrast eines Quellenbildes (Teilbild, aus dem das Zwischenbild interpoliert wurde), adaptiv reduziert werden. Nach dem Resampling 150 kann die Ausgabe 120 der Zwischenbilder 15 an das Display erfolgen.

Bisher wurde erläutert, wie mit dem erfindungsgemäßen Verfahren der an den Übergangszonen, insbesondere durch Doppelkonturen und invertierte Stereoansichten, verursachte störende Eindruck minimiert werden kann. Die vorliegende Erfindung lässt sich jedoch im Allgemeinen auch zur Reduktion von Quantisierungsfehlern heranziehen. Quantisierungsfehler entstehen im Wesentlichen dadurch, dass ein natürliches räumlich-kontinuierliches Lichtfeld abgetastet und quantisiert werden muss. Bei Bewegung entlang des Filters kann eine Doppelkontur oder eine Art "Umschnappen" des Bildes auftreten. Weit aus dem Bild heraus ragende oder weit hinein ragende Bilder werden gezielt unscharf.

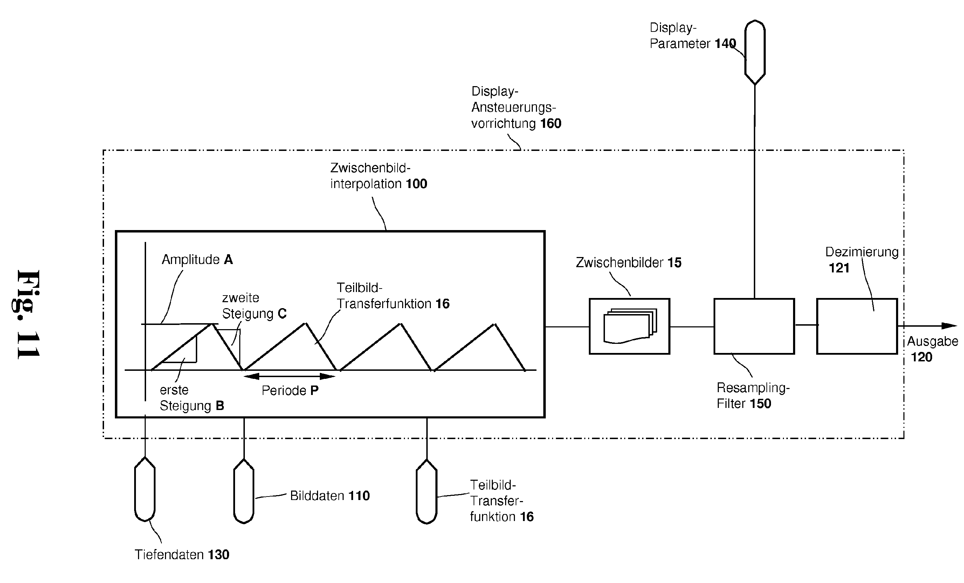

In Figur 11 ist anhand eines Blockschaltbildes eine gegenüber dem Beispiel gemäß Figur 10 modifizierte Display-Ansteuerungsvorrichtung dargestellt, die auch dafür geeignet ist, auch Quantisierungsfehler, insbesondere von tiefen-gemappten Bildern bzw. Teilbildern, zu reduzieren. Tiefen-Mapping bedeutet im Wesentlichen, dass die Bilddaten 110 mit Tiefendaten 130 versehen werden. Gegenüber der in Figur 10 gezeigten Anordnung werden die Zwischenbilder 15 einer Dezimierung 121 unterzogen, bevor die Ausgabe 120 an das Display erfolgt. Bei der Dezimierung 121 werden überflüssig gewordene Zwischenbilder verworfen. Insbesondere zur Verarbeitung von tiefen-gemappten Bildern können Verfahren zur räumlichen Zwischenbild-Interpolation verwendet werden, die sich in diesem Zusammenhang jedoch nicht von einer zeitlichen ZwischenbildInterpolation, wie sie beispielsweise in Video-Codecs angewendet wird, unterscheiden. Es sind insbesondere Zwischenbild-Interpolationsverfahren geeignet, die den Positionsunterschied eines Bildelements (z.B. Teilbild n, Pixel) eines Bildes (z.B. Teilbildfolge 12') zu seinem zeitlichen und/oder räumlichen zugeordneten Nachbarbildelement (z.B. Teilbild 1 der benachbarten Teilbildfolge 12) berücksichtigen. Es können beispielsweise bekannte Forward- oder Backward-Mapping-Verfahren angewendet werden. Forward-Mapping bildet geometrisch korrekt ab, führt jedoch zu Okklusionsbereichen bzw. Deklusionsbereichen (Bereiche an denen keine interpretierbaren Bildinformationen vorliegen) an solchen Stellen, an denen sich Sprünge im Vektorfeld eines entsprechenden Bildes bzw. Teilbildes befinden. Backward-Mapping hingegen ist lediglich für flächige Bereiche eines Vektorfeldes korrekt, führt allerdings weder zu Okklusions- noch zu Deklusionsbereichen. Backward-Mapping ist mithin ein einfach zu implementierendes Zwischenbild-Interpolations-Verfahren, da es nicht erforderlich ist, Okklusions- oder Deklusionsbereiche mit Bildinformationen zu versehen.

Im Folgenden wird kurz und allgemein das dem Backward-Mapping-Verfahren zugrunde liegende Prinzip beschrieben. Hierbei werden kartesische (f,x,y)-Koordinaten verwendet. Wenn P0 (x,y) ein Bildpunkt eines beliebigen Bildes X0, P1(x,y) ein Bildpunkt eines zum Bild X1 benachbarten Bildes X1 sowie Vx(x,y) ein horizontaler und Vy(x,y) ein vertikaler Vektor sind (Vx, Vy: Tiefeninformation angegeben als Disparität), so gilt:

$$P(f,x,y)=P0(x,y) \cdot (1-f)+P1(x+Vx(x,y),y+Vy(x,y)) \cdot f,$$

wobei P(f,x,y) ein in diesem Fall linear interpolierter neuer Bildpunkt eines Bildes, beispielsweise eines Zwischenbildes, an der Position (f,x,y) ist.

Beim Forward-Mapping-Verfahren werden ebenfalls kartesische (f,x,y)-Koordinaten verwendet. Wenn P0(x,y) ein Bildpunkt eines beliebigen Bildes X0, P1 (x,y) ein Bildpunkt eines zum Bild X1 benachbarten Bildes X1 sowie Vx0 (x,y) ein horizontaler und Vy0(x,y) ein vertikaler Vektor (Vx0, Vy0: Tiefeninformation angegeben als Disparität) des Bildes X0 sind, und wenn Vx1, Vy1 die entsprechenden Vektoren des Bildes X1 sind, wobei die Vektoren mit invertiertem Vorzeichen auf das benachbarte Bild X0 bezogen werden, so gilt:

$$fx=Vx0(x,y) \cdot (1-f),$$

$$fy=Vy0(x,y)\cdot(1-f),$$

$$bx=Vx1(x,y)\cdot(1-f),$$

und

$$by=Vy1(x,a)\cdot(1-f);$$

sowie

$$P0(fx,fy)=P0(x,y),$$

$$P1(bx,by)=P1(x,y),$$

und folglich

$$P(f,x,y)=P0(fx,fy)\cdot(1-f)+P1(bx,by)\cdot f.$$

Das Forward-Mapping kann beispielsweise durch einen bekannten Pixel-Displacement- oder einen bekannten Ray-Casting-Algorithmus gelöst werden. Bei Anwendung des Pixel-Displacement-Algorithmus müssen die Okklusions- und Deklusionsbereiche (Lücken) mit Bildinformationen versehen werden. Bei Anwendung des Ray-Casting-Algorithmus hingegen ergeben sich mögliche Bildinformationen für etwaige Lücken automatisch, da der Ray-Casting-Algorithmus rückwärtige Pixel sucht.

**Patentansprüche**

1.   Bildwiedergabeverfahren für ein autostereoskopisches Display mit einem Panel und einer vor dem Panel angeordneten haploskopischen Anordnung, das folgende Schritte aufweist:

Anzeigen von wenigstens zwei Teilbildfolgen auf dem Panel, wobei jede Teilbildfolge Teilbilder aufweist, die sich parallaktisch unterscheiden, wobei sich zwischen zwei entlang einer ersten Richtungsachse benachbart dargestellten Teilbildfolgen jeweils eine Übergangszone befindet, und
Einfügen von wenigstens einem Zwischenbild in wenigstens eine der Übergangszonen zwischen zwei benachbarten Teilbildfolgen, wobei jede der Teilbildfolgen zumindest ein an eine der Übergangszonen angrenzendes Teilbild aufweist, und wobei das Zwischenbild gegenüber einem der an eine der Übergangszonen angrenzenden Teilbilder einer der Teilbildfolgen invertiert ist.

2.   Bildwiedergabeverfahren gemäß Anspruch 1, bei dem wenigstens zwei invertierte Zwischenbilder in jede Übergangszone eingefügt werden.

3.   Bildwiedergabeverfahren gemäß Anspruch 1 oder 2, bei dem die Anzahl der invertierten Zwischenbilder in den Übergangszonen gleich der Anzahl der Teilbilder der Teilbildfolgen ist.

4.   Bildwiedergabeverfahren gemäß einem der vorhergehenden Ansprüche, bei dem die invertierten Zwischenbilder durch Wiederholung von nicht an Übergangszonen angrenzenden Teilbildern in die Übergangszonen erzeugt werden.

5. Bildwiedergabeverfahren gemäß einem der vorhergehenden Ansprüche, bei dem die Zwischenbilder und die Teilbilder einer Teilbild-Transferfunktion genügen, wobei durch die Teilbild-Transferfunktion die Anzahl (n) der Teilbilder und der invertierten Zwischenbilder sowie der Abstand (x') der Teilbilder und der Zwischenbilder auf dem Panel festgelegt wird.

6. Bildwiedergabeverfahren gemäß Anspruch 5, bei dem die Teilbild-Transferfunktion eine Dreiecksfunktion oder eine Sägezahnfunktion ist.

7. Bildwiedergabeverfahren gemäß Anspruch 5 oder 6, bei dem die Steigung der Transferfunktion stufenlos variierbar ist.

8. Bildwiedergabeverfahren gemäß einem der vorhergehenden Ansprüche, bei dem die haploskopische Anordnung ein optisches Barrierefilter oder eine Lentikularfolie ist.

9. Bildwiedergabeverfahren für ein autostereoskopisches Display mit einem Panel und einer vor dem Panel angeordneten haploskopischen Anordnung, das folgende Schritte aufweist:

Anzeigen von wenigstens zwei Teilbildfolgen auf dem Panel, wobei jede Teilbildfolge Teilbilder aufweist, die sich parallaktisch unterscheiden, wobei sich zwischen zwei in entlang einer ersten Richtungsachse benachbarten Teilbildfolgen jeweils eine Übergangszone befindet,
Einfügen von wenigstens einem von mit den Teilbildern assoziierten Tiefendaten abhängigen Zwischenbild in wenigstens eine der Übergangszonen zwischen zwei benachbarten Teilbildfolgen, wobei jede der Teilbildfolgen zumindest ein an eine der Übergangszonen angrenzendes Teilbild aufweist, und wobei das Zwischenbild gegenüber einem der an eine der Übergangszonen angrenzenden Teilbilder einer der Teilbildfolgen invertiert ist,
Filtern der Zwischenbilder abhängig von Displayparametern, und
Dezimierung der gefilterten Zwischenbilder.

AUTOSTEREOSKOPISCHES DISPLAY

Panel **10**

Abstand **f**

haploskopische
Anordnung **100**

Abstand **f'**

BETRACHTER
**20**

# Fig. 1

Barrierefilter **100**

(opake) Streifen **110**

Freiräume **120**
(Filterapertur)

# Fig. 2

Panel **10**

Teilbilder **13**

haploskopische
Anordnung **100**

Betrachter **20**

rechtes Auge **21**

Übergangszone **14**

Teilbildfolge **12**

linkes Auge **22**

x

f'

f

erste Richtungsachse **11**

# Fig. 3

Panel **10**

Teilbilder **13**

haploskopische
Anordnung **100**

r [x]

Betrachter **20**
(in Position **A**)

Teilbildfolge **12**

Teilbildfolge **12'**

rechtes Auge **21**
(sieht Teilbild 1)

erste Richtungsachse **11**

linkes Auge **22**
(sieht Teilbild 2)

**Fig. 4**

Betrachter **20**
(in Position **B**)

r [x]

rechtes Auge **21**
(sieht Teilbild n)

Panel **10**

Teilbilder **13**

haploskopische
Anordnung **100**

Teilbildfolge **12**

Teilbildfolge **12'**

linkes Auge **22**
(sieht Teilbild 1)

erste Richtungsachse **11**

**Fig. 5**

**Fig. 6**

**Fig. 7**

Fig. 8

Fig. 9

Fig. 10

EP 2 495 978 A1

Display-Parameter **140**

Display-Ansteuerungs-vorrichtung **160**

Zwischenbild-interpolation **100**

Amplitude **A**

zweite Steigung **C**

Teilbild-Transferfunktion **16**

erste Steigung **B**

Periode **P**

Zwischenbilder **15**

Ausgabe **120**

Resampling-Filter **150**

Bilddaten **110**

Teilbild-Transfer-funktion **16**

16

**Fig. 11**

Europäisches
Patentamt

European
Patent Office

Office européen
des brevets

# EUROPÄISCHER RECHERCHENBERICHT

**Nummer der Anmeldung**

EP 11 15 7064

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2010/007721 A1 (KIM HEE-SEOP [KR] ET AL) 14. Januar 2010 (2010-01-14) * Seite 1, Absatz 13 - Seite 4, Absatz 74; Abbildungen 1-3,5-7 * ----- | 1-9 | INV. H04N13/00 |
| Y | EP 0 887 699 A1 (EASTMAN KODAK CO [US]) 30. Dezember 1998 (1998-12-30) * Spalte 6, Zeile 33 - Spalte 8, Zeile 47; Abbildungen 1,3-5 * ----- | 1-9 | |
| A | WO 2009/119279 A1 (TOSHIBA KK [JP]; HIRAYAMA YUZO [JP]; KOKOJIMA YOSHIYUKI [JP]; KOBAYASH) 1. Oktober 2009 (2009-10-01) * Seite 10, Zeile 12 - Seite 16, Zeile 13; Abbildungen 1-7 * ----- | 1-9 | |

**RECHERCHIERTE SACHGEBIETE (IPC)**

H04N
G02B

Der vorliegende Recherchenbericht wurde für alle Patentansprüche erstellt

| Recherchenort | Abschlußdatum der Recherche | Prüfer |
|---|---|---|
| München | 12. Juli 2011 | Dinov, Vassil |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

.............................................................

& : Mitglied der gleichen Patentfamilie, übereinstimmendes
Dokument

EPO FORM 1503 03.82 (P04C03)

**EP 2 495 978 A1**

**ANHANG ZUM EUROPÄISCHEN RECHERCHENBERICHT
ÜBER DIE EUROPÄISCHE PATENTANMELDUNG NR.**            EP 11 15 7064

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-07-2011

| Im Recherchenbericht angeführtes Patentdokument | Datum der Veröffentlichung | Mitglied(er) der Patentfamilie | Datum der Veröffentlichung |
|---|---|---|---|
| US 2010007721 A1 | 14-01-2010 | KR 20100006955 A | 22-01-2010 |
| EP 0887699 A1 | 30-12-1998 | JP 11142996 A<br>US 6405464 B1<br>US 6177953 B1 | 28-05-1999<br>18-06-2002<br>23-01-2001 |
| WO 2009119279 A1 | 01-10-2009 | JP 2009239665 A<br>US 2011032339 A1 | 15-10-2009<br>10-02-2011 |

EPO FORM P0461

Für nähere Einzelheiten zu diesem Anhang : siehe Amtsblatt des Europäischen Patentamts, Nr.12/82

19